# EUROPÄISCHE PATENTSCHRIFT

(11) **EP 1 426 127 B1**
(45) Veröffentlichungstag und Bekanntmachung des Hinweises auf die Patenterteilung: **19.10.2005**
(21) Anmeldenummer: 03018900.5
(22) Anmeldetag: 20.08.2003
(51) Int. Cl.: B23B 27/06

(54) **Schneidwerkzeug, insbesondere zur Bearbeitung von Kolbenringen**
Cutting tool, specially for cutting piston rings
Outil de coupe, spécialement à usiner des segments de pistons

(30) Priorität: 13.09.2002 DE 20214238 U; 02.11.2002 DE 20216864 U
(43) Veröffentlichungstag der Anmeldung: 09.06.2004
(73) Patentinhaber: KENNAMETAL INC., Latrobe, PA 15650-0231 (US)
(72) Erfinder: Dorsch, Walter, 91364 Unterleinleiter (DE)
(74) Vertreter: Tergau & Pohl Patentanwälte

(56) Entgegenhaltungen:
- DE-A- 2 363 660
- GB-A- 1 430 570
- SU-A- 1 537 386
- US-A- 3 163 918

## Beschreibung

Die Erfindung bezieht sich auf ein Schneidwerkzeug, welches insbesondere zur Bearbeitung eines Kolbenrings vorgesehen ist.

Kolbenringe werden als Massenartikel in Verbrennungsmotoren, z. B. in der Automobilbranche eingesetzt. Die Herstellung von Kolbenringen, die üblicherweise mittels spanender Bearbeitungsverfahren durchgeführt wird, ist insbesondere insofern kompliziert, als Kolbenringe im Allgemeinen an deren Außenumfang eine fein strukturierte Oberfläche aufweisen. So sind herkömmliche Kolbenringe oft mit einem ringförmigen Zentrier- oder Abstandssteg versehen, dessen bezüglich der Kolbenringachse axiale Ausdehnung lediglich wenige Millimeter beträgt. Eine derart feine Außenkontur wird oft durch eine bezüglich des Kolbenrings sowohl axiale als auch radiale Verfahrung des Schneidwerkzeugs entlang des Kolbenringumfangs erzeugt. Ein solches Verfahren ist jedoch vergleichsweise zeitaufwändig und deshalb für eine Massenproduktion nur bedingt geeignet.

Bei einem aus der US 4,406,192 bekannten Schneidwerkzeug zur Herstellung eines Kolbenrings wird das Schneidwerkzeug in axialer Richtung an den Umfang einer Rohform herangeführt und schneidet dabei zunächst nur eine Halbkontur in eine Stirnseite der Rohform. Zur Fertigstellung des Kolbenrings ist ein zweiter Verarbeitungsschritt erforderlich, im Verlauf dessen eine Bearbeitung der zweiten Stirnseite der Rohform erfolgt.

Aus der EP 1 033 210 A2 und der DE 298 04 413 U1 sind ferner insbesondere für Fräswerkzeuge vorgesehene Schneidplatten offenbart. Aus der EP 1 033 210 A2 ist bekannt, bei einer einstückigen Schneidplatte eine Schneidkante vorzusehen, die eine gekrümmte oder abgestufte Kontur aufweist. Die Herstellung einer solchen Schneidplatte ist jedoch vergleichsweise aufwändig, insbesondere wenn die Kontur eine feine Strukturierung, insbesondere Kanten und Einschnitte, aufweisen soll. Aus der DE 298 04 413 U1 ist die Verwendung von zwei, über den Umfang eines gemeinsamen Fräskopfes verteilten Schneidplatten zur Ausfräsung einer Oberflächenkontur eines Werkstückes bekannt. Dabei wird von jeder Schneidplatte bei der Rotation des Fräskopfes jeweils eine Halbkontur des Werkstückes herausgearbeitet.

Der Erfindung liegt die Aufgabe zugrunde, ein Schneidwerkzeug anzugeben, welches zur Herstellung einer feinen Außenkontur, insbesondere eines Kolbenrings, besonders geeignet ist. Insbesondere sollen dabei auch die Herstellung und der laufende Betrieb des Schneidwerkzeugs kostengünstig sein.

Diese Aufgabe wird erfindungsgemäß gelöst durch die Merkmale des Patentanspruchs 1. Danach umfasst das Schneidwerkzeug eine Schneidplatte mit einer an deren Frontkante angeordneten ersten Hauptschneidkante, in welche ein etwa U-förmiger Einschnitt eingesenkt ist. Die Seitenschenkel des Einschnitts bilden dabei jeweils eine Nebenschneidkante. Der Boden des Einschnitts bildet eine in Vorschubrichtung hinter die erste Hauptschneidkante zurückversetzte zweite Hauptscheidkante. Die Schneidplatte umfasst mindestens zwei unzusammenhängende Teilstücke, von denen jedes einen Teil des Einschnitts, und damit die zugehörigen Schneidkanten, trägt.

Der Grundgedanke der Erfindung besteht darin, dass die Herstellung der Außenkontur wesentlich vereinfacht wird durch ein Werkzeug, welches die Außenkontur entlang eines bezüglich der Werkstückachse radialen Vorschubwegs in einem Arbeitsgang ausschneidet. Dieses vereinfachte Herstellungsverfahren wird möglicht durch eine Schneidplatte mit einem feinen Einschnitt. Eine einstückige Herstellung einer solchen Schneidplatte ist jedoch sehr kompliziert, zumal die innerhalb des Einschnitts gelegenen Kanten der Schneidplatte nicht oder nur schwer für Schleifwerkzeuge zugänglich sind, und deshalb das Aufbringen der Schneidkanten behindert ist. Eine problemlose Herstellung der Schneidplatte ist hingegen erkanntermaßen möglich, wenn die Schneidplatte mehrteilig ausgeführt ist und die Trennlinie zwischen angrenzenden Teilstücken der Schneidplatte im Bereich des Einschnitts liegt. Auf diese Weise kann jedes Teilstück der Schneidplatte separat angeschliffen werden, wobei ein ungehinderter Zugang des Schleifwerkzeugs zu jeder Schneidkante gesichert ist. Der zur Erzeugung der feinen Außenkontur erforderliche Einschnitt entsteht somit erst nach dem Aneinanderlegen der einzelnen Teilstücke.

Bevorzugt ist zwischen der ersten Hauptschneidkante und dem jeweils angrenzenden Seitenschenkel des Einschnitts ein spitzer Winkel gebildet, so dass die lichte Weite des Einschnitts sich zur Plattenmitte hin und damit entgegen der vorgesehenen Vorschubrichtung, aufweitet. Dies gewährleistet einen ausreichenden Freigang für die an den Seitenschenkeln angeordneten Nebenschneidkanten. Vorzugsweise bildet die erste Hauptschneidkante eine gerade Linie. Weiterhin ist vorgesehen, dass die zweite Hauptschneidkante parallel zur ersten Hauptschneidkante verläuft. Diese Formgebung ist insbesondere zweckmäßig zur Herstellung eines herkömmlichen Kolbenrings, an dessen Außenumfang ein im Querschnitt rechteckiger Zentrier- und Abstandssteg vorgesehen ist. Bei Bedarf können äquivalenterweise die erste und/oder die zweite Hauptschneidkante schräg zur Vorschubrichtung orientiert sein. Ferner können mittels einer gekrümmten ersten und/oder zweiten Hauptschneidkante auch gekrümmte Außenkonturen erzeugt werden. Ebenso ist zur Erzeugung einer unsymmetrisch gestuften Außenkontur eine parallel versetzte Anordnung der Frontkanten der beiden Teilstücke denkbar.

In vorteilhafter Ausgestaltung sind die Seitenkanten jedes Teilstücks zueinander parallel. Die Seitenkanten eines einzelnen Teilstücks sowie die Seitenkanten verschiedener Teilstücke stehen somit in stets gleichem Winkel zur vorgesehenen Vorschubrichtung und können somit sowohl als Anlagefläche an einem Werkzeughalter als auch als Anlagefläche zwischen angrenzenden Teilstücken verwendet werden. Bevorzugt sind die Seitenkanten dabei schräg bezüglich der Vorschubrichtung orientiert. Durch eine zur Vorschubrichtung etwa senkrechte Hinterkante jedes Teilstücks wird eine besonders einfache Justierung des Teilstücks auf einen Werkzeughalter erzielt. Des Weiteren dient die Hinterkante als stabiler, flächiger Anschlag zur Kompensierung der beim Vorschub vom Werkstück auf das Teilstück ausgeübten Kräfte. Prinzipiell können die Seitenkanten und die Hinterkante jedoch beliebig geformt sein. Zur teilweisen Wahrung der beschriebenen Vorteile ist lediglich zu gewährleisten, dass die Teilstücke bündig aneinander sowie an entsprechende Anlageflächen des Werkzeughalters anlegbar sind.

Vorteilhafterweise ist die Schneidplatte zweistückig ausgeführt, wobei die Trennlinie zwischen den beiden Teilstücken derart verläuft, dass ein Teilstück einen Seitenschenkel des Einschnitts trägt, während das zweite Teilstück den Boden sowie den anderen Seitenschenkel trägt. Der Vorteil dieser Ausführung liegt insbesondere darin, dass die beiden Teilstücke in einem der beim Schneidvorgang kaum mechanisch beanspruchten Eckpunkte des U-förmigen Einschnitts aufeinander stoßen, und somit ein vorzeitiger Verschleiß der Schnittkanten an der Stoßstelle verhindert ist. Des Weiteren sind bei dieser Ausführung die Schneidkanten besonders einfach anzuschleifen.

Besonders vorteilhaft ist eine Ausführung der Erfindung, in der die Teilstücke identisch ausgebildet und damit insbesondere flächenmäßig deckungsgleich sind. In dieser Ausführung sind beide Seitenkanten jedes Teilstücks mit einem Aus- oder Anschnitt versehen, der den zum Aus- oder Anschnitt der jeweils anderen Seitenkante komplementären Teil des U-förmigen Einschnitts bildet. Durch Anlegen zweier solcher identischer Teilstücke wird somit automatisch der Einschnitt vervollständigt. Die identische Ausfertigung der Teilstücke vereinfacht die Herstellung der Schneidplatte sowie deren Einsatz, zumal nur eine einzige Form von Teilstücken hergestellt bzw. auf Lager gehalten werden muss. Ein weiterer großer Vorteil liegt darin, dass die Teilstücke nach Art einer Wendeplatte vertauscht werden können, wobei die bisher am Seitenrand gelegenen Schneidkanten der Schneidplatte wiederum einen identischen U-förmigen Einschnitt mit neuen, unbenutzten Schneidkanten bilden.

Ein ähnlicher Vorteil wird durch eine bezüglich des Flächenmittelpunktes eines Teilstücks punktsymmetrische Ausgestaltung des Teilstücks erzielt. Auf diese Weise tragen je zwei diagonal gegenüberliegende Eckpunkte jedes Teilstücks die gleiche Schneidkantenanordnung, so dass bei einer 180°-Drehung um den Flächenmittelpunkt nach Art einer Wendeplatte eine verbrauchte Schneidkante durch eine identische, neue Schneidkante ersetzbar ist. Sind die Teilstücke, wie bevorzugt, deckungsgleich und punktsymmetrisch ausbildet, so existieren zu je zwei Teilstücken vier identische Anordnungen. Das Schneidkantenmaterial wird somit besonders gut ausgenutzt.

Ein für die erfindungsgemäße Schneidplatte besonders geeigneter Werkzeughalter umfasst eine Auflagefläche für die Schneidplatte sowie einen rückwärtigen und einen seitlichen Anschlag, welche mit der Hinterkante der Schneidplatte bzw. mit einer Seitenkante der Schneidplatte zusammenwirken. Der erfindungsgemäße Werkzeughalter erlaubt eine einfache Montage der Schneidplattenstücke bei gleichzeitig hoher Stabilität. Die Schneidplattenstücke werden entweder durch Schrauben am Werkzeughalter fixiert, bevorzugt aber durch eine Pratzenklemmung. Durch die Pratzenspannung werden die Teilstücke der Schneidplatte dabei vorteilhafterweise gegen die Anschläge des Werkzeughalters beaufschlagt und somit selbsttätig justiert. Zweckmäßigerweise ist dabei die oder jede Pratze derart angeordnet, dass sie unbenutzte Schneidkanten des jeweiligen Schneidplattenstückes überdeckt und somit gegen eine Beschädigung durch abgespantes Material schützt.

Nachfolgend werden Ausführungsbeispiele der Erfindung anhand einer Zeichnung näher erläutert. Darin zeigen:
- Fig. 1: in Draufsicht ein Schneidwerkzeug mit einem Werkzeughalter und einer zweiteilig ausgeführten Schneidplatte sowie ein bearbeitetes Werk- stück, insbesondere einen Kolbenring,
- Fig. 2: in einer Darstellung gemäß Fig. 1 eine alternative Ausführungsform des Schneidwerkzeugs,
- Fig. 3: in vergrößerter Darstellung eine Detailansicht III gemäß Fig. 2,
- Fig. 4: in einer Darstellung gemäß Fig. 1 eine weitere Ausführungsform des Schneidwerkzeugs und
- Fig. 5: in einem Querschnitt V-V das Schneidwerkzeug gemäß Fig. 4.

Einander entsprechende Teile sind in den Figuren mit den gleichen Bezugszeichen versehen.

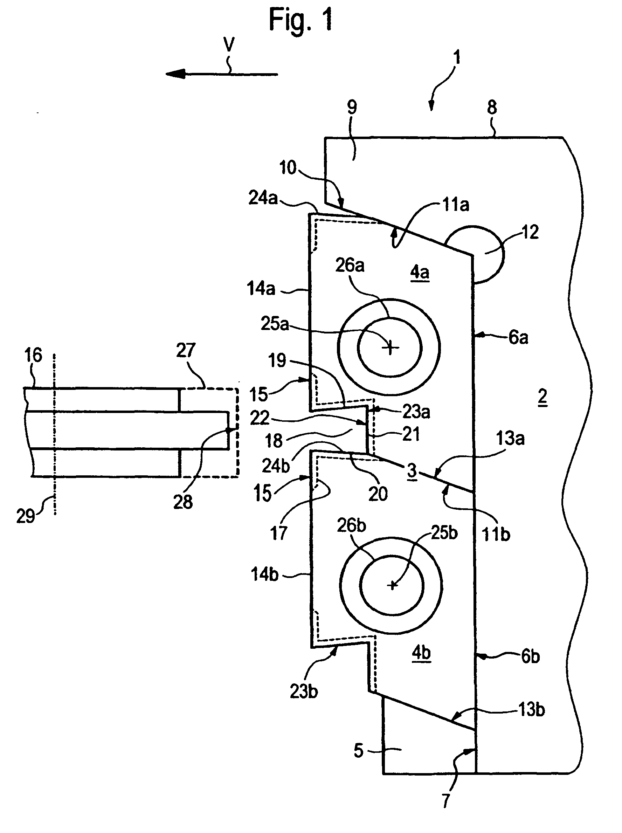

Das in Fig. 1 dargestellte Schneidwerkzeug 1 umfasst einen Werkzeughalter 2 sowie eine auf diesem montierte Schneidplatte 3. Die Schneidplatte 3 ist aus zwei identischen Teilstücken 4a, 4b mit jeweils etwa parallelogrammartiger Grundfläche gebildet. Die Teilstücke 4a, 4b liegen auf einer, in der vorgesehenen Vorschubrichtung V gesehen, frontseitig in den Werkzeughalter 2 eingebrachten Abstufung 5 auf, so dass jedes Teilstück 4a, 4b mit einer dem Werkzeughalter 2 zugewandten Hinterkante 6a,6b an der Rückwand 7 der Abstufung 5 anliegt. Die Rückwand 7 bildet somit einen rückwärtigen Anschlag für die Teilstücke 4a, 4b. Die Abstufung 5 ist zu einem Querende 8 des Werkzeughalters 2 hin durch einen Haltevorsprung 9 begrenzt, dessen Innenwand 10 einen seitlichen Anschlag für das Teilstück 4a bildet. Die Innenwand 10 nimmt dazu mit der Rückwand 7 einen stumpfen Winkel ein, der dem stumpfen Parallelogrammwinkel des parallelogrammartigen Teilstücks 4a entspricht. Dadurch liegt eine Seitenkante 11 a des Teilstücks 4a flächig an der Innenwand 10 an. Eine im Bereich der Schnittlinie zwischen der Innenwand 10 und Rückwand 7 in den Werkzeughalter 2 eingebrachte Ausnehmung 12 verbessert die Anlage des Teilstücks 4a an der Innenwand 10 und Rückwand 7. Die der Seitenkante 11a gegenüberliegende Seitenkante 13a dient als Anlagefläche für die angrenzende Seitenkante 11b des zweiten Teilstücks 4b, welches parallel versetzt zum ersten Teilstück 4a ebenfalls in der Abstufung 5 einliegt.

Die beiden, der jeweiligen Hinterkante 6a, 6b des jeweiligen Teilstücks 4a bzw. 4b entgegengesetzten Frontkanten 14a und 14b fluchten miteinander und bilden zusammen eine erste, zur Vorschubrichtung V etwa senkrecht ausgerichtete Hauptschneidkante 15 zur spanenden Bearbeitung eines Werkstücks 16. Die Hauptschneidkante 15 ist zumindest in dem mit dem Werkstück 16 in Berührung kommenden Teilbereich mit einem Anschliff 17 versehen. Im Stoßbereich zwischen den Teilstücken 4a und 4b ist die erste Hauptschneidkante 15 durch einen Einschnitt 18 unterbrochen, der etwa die Form eines eckigen Buchstaben "U" aufweist. Der Einschnitt 18 umfasst zwei Seitenschenkel 19 und 20, die von der ersten Hauptschneidkante 15 unter einem 90° geringfügig unterschreitenden, spitzen Winkel entgegen der Vorschubrichtung V abgewinkelt und zur Bildung von Nebenschneidkanten angeschliffen sind. Weiterhin umfasst der Einschnitt 18 einen, die beiden Seitenschenkel 19 und 20 verbindenden, zur ersten Hauptschneidkante 15 parallelen Boden 21, der eine gegenüber der ersten Hauptschneidkante 15 in Vorschubrichtung V zurückversetzte zweite Hauptschneidkante 22 bildet und zu diesem Zweck ebenfalls angeschliffen ist.

Der Einschnitt 18 ist bezüglich der Teilstücke 4a und 4b derart angeordnet, dass das Teilstück 4a den Seitenschenkel 19 und den Boden 21 trägt, während das Teilstück 4b den zweiten Seitenschenkel 20 trägt. Mit anderen Worten verläuft die Trennlinie zwischen den beiden Teilstücken 4a und 4b derart, dass sie genau im Übergang zwischen dem Seitenschenkel 20 und dem Boden 21 auf den Einschnitt 18 stößt. Für sich betrachtet ist das Teilstück 4a in dem zwischen der Seitenkante 13a und der Frontkante 14a gebildeten Eckbereich mit einem spitzwinkligem Ausschnitt 23a versehen, dessen angeschliffene Schenkel den Seitenschenkel 19 und den Boden 21 bilden. Dagegen trägt das Teilstück 4b an dessen Seitenkante 11b einen angeschliffenen und unter einem stumpfen Winkel von der Seitenkante 11 b abgewinkelten Anschnitt 24b, der den Seitenschenkel 20 bildet.

Zumal die Teilstücke 4a und 4b identisch ausgeführt sind, ist auch das Teilstück 4a an dessen Seitenkante 11a mit einem entsprechenden Anschnitt 24a versehen. Ebenso trägt das Teilstück 4b an dessen Seitenkante 13b einen spitzwinkligen Ausschnitt 23b. Bei einer Vertauschung der Teilstücke 4a und 4b, z. B. nach einem Verschleiß der im Bereich des Ausschnitts 23a und des Anschnitts 24b anordneten Schneidkanten, wird die in Fig. 1 dargestellte Schneidplatte 3 identisch reproduziert. Dabei würde jedoch der Einschnitt 18 durch den Ausschnitt 23b sowie den Anschnitt 24a gebildet. Die Teilstücke 4a und 4b sind somit nach dem Prinzip einer Wendeschneidplatte mehrfach verwendbar. Ebenso ist es möglich, in nicht näher dargestellter Weise weitere zu den Teilstücken 4a und 4b identische Teilstücke an das Teilstück 4b anzulegen, so dass mehrere, zu dem Einschnitt 18 identische Einschnitte nebeneinander angeordnet wären.

Zur Befestigung der Teilstücke 4a und 4b am Werkzeughalter 2 ist jedes Teilstück 4a, 4b mit einer bezüglich des Flächenmittelpunktes 25a, 25b der parallelogrammartigen Grundform des jeweiligen Teilstücks 4a, 4b zentrierten Bohrung 26a, 26b versehen, durch die das Teilstück 4a, 4b auf nicht näher dargestellte Weise am Werkzeughalter 2 anschraubbar ist.

Zur Bearbeitung des Werkstücks 16, das vor Bearbeitung als gestrichelt angedeutete, etwa kreisringförmige Rohform 27 vorliegt, wird das Schneidwerkzeug 1 in Vorschubrichtung V gegen den Umfang 28 der um die Ringachse 29 rotierenden Rohform 27 vorgeschoben. Die mit durchgezogenen Linien dargestellte, gestufte Kontur des Werkstücks 16 wird dabei in einem einzigen Schneidvorgang herausgedreht. Durch die sich entgegen der Vorschubrichtung V aufweitende Form des Einschnitts 18 ist der erforderliche Freigang der als Nebenschneidkanten dienenden Seitenschenkel 19 und 20 gewährleistet.

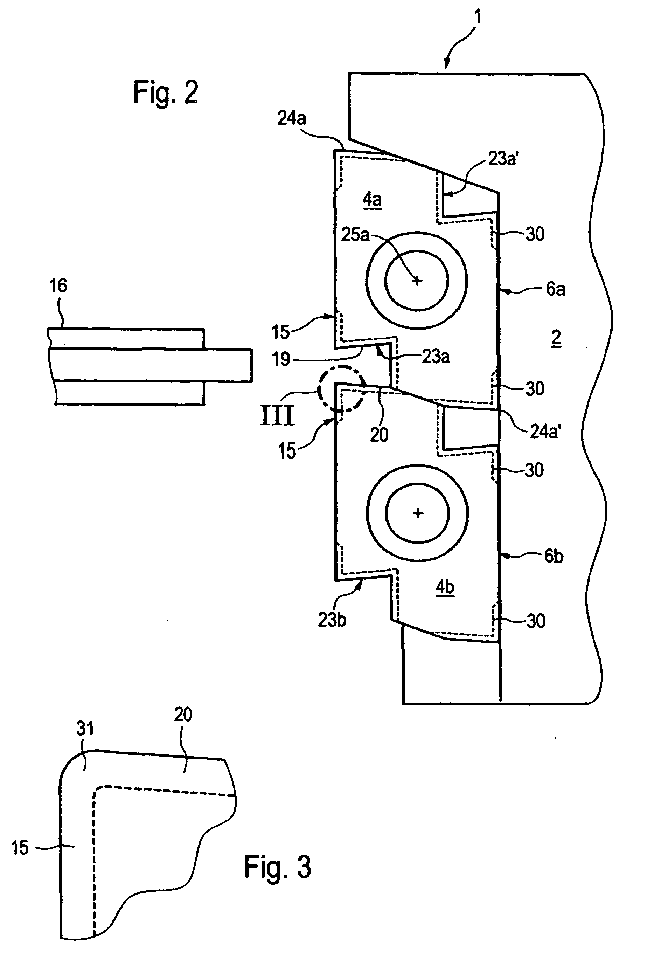

In Fig. 2 ist eine alternative Ausführungsform des Schneidwerkzeugs 1 dargestellt, welche sich durch die Formgebung der Teilstücke 4a und 4b von der in Fig. 1 dargestellten Ausführung unterscheidet. Die wiederum identischen Teilstücke 4a und 4b sind hier mit zusätzlichen, an der Hinterkante 6a, 6b angeordneten Anschliffen 30 versehen. So ist das Teilstück 4a mit einem Ausschnitt 23a' versehen, der bezüglich des Flächenmittelpunktes 25a punktsymmetrisch zum Ausschnitt 23a ist. Ebenso trägt das Teilstück 4a einen zum Anschnitt 24a bezüglich des Flächenmittelpunktes 25a punktsymmetrischen Anschnitt 24a'. Das Teilstück 4a ist dadurch in sich punktsymmetrisch ausgebildet. Entsprechendes gilt für das Teilstück 4b.

Durch die Formgebung wird eine verbesserte Materialausnutzung der Teilstücke 4a und 4b erreicht, zumal jedes Teilstück 4a und 4b durch eine 180°-Drehung um den Flächenmittelpunkt 25a bzw. 25b in eine zur Ausgangslage identische Position übergeht, und es somit vier identische Kombinationsmöglichkeiten der Teilstücke 4a und 4b mit einer jeweils anderen Schneidkantenanordnung im Einschnitt 18 gibt.

In Fig. 3 ist eine vergrößerte Detailansicht des zwischen der ersten Hauptschneidkante 15 und dem Seitenschenkel 20 gebildeten Eckbereichs dargestellt. Hierin wird deutlich, dass der Eckbereich 31 ausgerundet ausgebildet ist, um die Bildung einer scharfen Kante am fertigen Werkstück 16 zu vermeiden. Eine identische Ausrundung besitzt auch der zwischen der ersten Hauptscheidkante 15 und dem Seitenschenkel 19 gebildete Eckbereich. Anstelle der Ausrundung kann der Eckbereich 31 auch eine so genannte Fase, d.h. eine bezüglich der Hauptschneidkante 15 etwa einen 45°-Winkel einnehmende Abschrägung tragen.

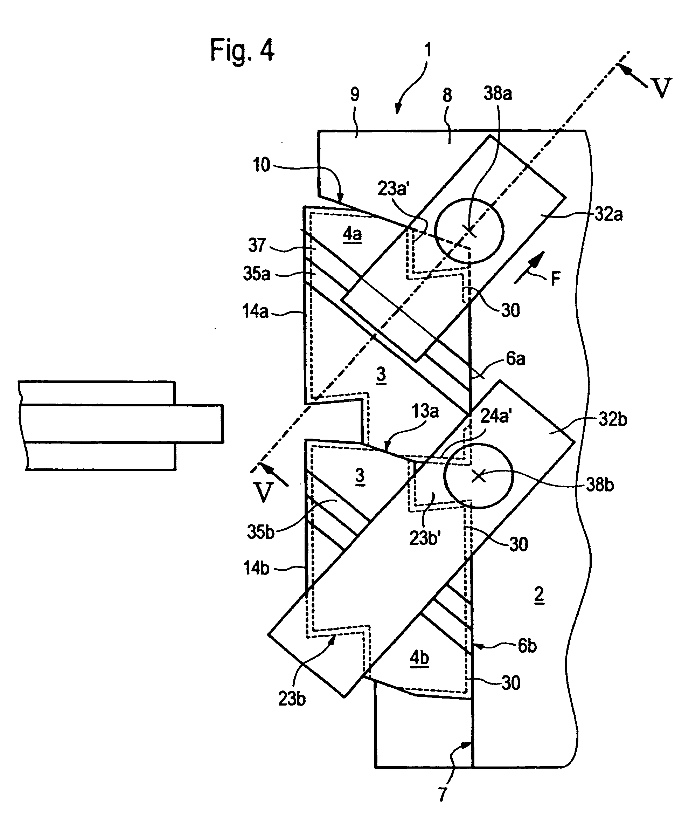

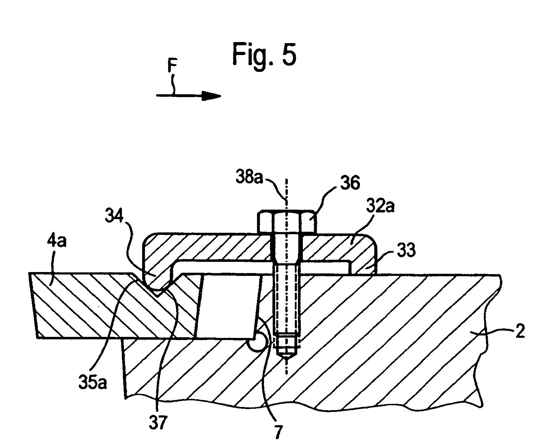

Eine in Fig. 4 abgebildete weitere Ausführungsform des Schneidwerkzeugs 1 unterscheidet sich von der in Fig. 2 dargestellten Ausführung dadurch, dass anstelle der Schraubfixierung die Teilstücke 4a und 4b durch je eine Klemmpratze 32a und 32b am Werkzeughalter 2 fixiert sind. Jede Klemmpratze 32a, 32b ist, wie insbesondere auch aus dem in Fig. 5 gezeigten Querschnitt hervorgeht, mit einem Stützsteg 33 auf dem Werkzeughalter 2 abgestützt und greift andererseits mit einem Haltesteg 34 in eine etwa V-förmige Nut 35a, 35b des entsprechenden Teilstücks 4a, 4b ein. Jede Klemmpratze 32a, 32b wird durch eine Schraube 36a,36b gegen den Werkzeughalter 2 beaufschlagt und hält so das Teilstück 4a, 4b am Werkzeughalter 2. Durch Auflage des Haltestegs 34 auf der schrägen Wand 37 der V-förmigen Nut 35a, 35b wird das Teilstück 4a, 4b nicht nur in Richtung der Schraubenachse 38, sondern auch senkrecht dazu mit einer in Längsrichtung der Klemmpratze 32a, 32b gerichteten Kraft F beaufschlagt. Dies ist insbesondere vorteilhaft, wenn, wie in Fig. 4 dargestellt, die Klemmpratzen 32a, 32b diagonal bezüglich des Werkzeughalters 2 angeordnet sind und somit sowohl zu der Rückwand 7 als auch zu der Innenwand 10 bzw. der Seitenkante 13a etwa in gleichem Winkel stehen. Die Teilstücke 4a und 4b werden dann beim Anziehen der Schrauben 38a, 38b durch die Kraft F gegen die entsprechenden Anschläge gedrückt und dadurch selbsttätig justiert. Die Klemmpratzen 32a, 32b sind außerdem so angeordnet, dass sie die zum Schneiden unbenutzten Aus- und Anschnitte 23a', 24a', 23b' und 24b bedecken und somit gegen eine Beschädigung durch Spanabfälle schützen.

Bei der in den Fig. 4 und 5 gezeigten Ausführung der Schneidplatte 3 sind ferner die Frontkanten 14a, 14b über ihre gesamte Länge angeschliffen. Entsprechendes gilt für die Hinterkanten 6a, 6b. Um eine flächige Anlage der Hinterkanten 6a, 6b an der Rückwand 7 sicherzustellen, ist letztere in dieser Ausführung unter einem, dem Freiwinkel des Anschliffs entsprechenden Winkel angeschrägt.

### Bezugszeichenliste

- 1: Schneidwerkzeug
- 2: Werkzeughalter
- 3: Schneidplatte
- 4: Teilstück
- 5: Abstufung
- 6: Hinterkante
- 7: Rückwand
- 8: Querende
- 9: Haltevorsprung
- 10: Innenwand
- 11: Seitenkante
- 12: Ausnehmung
- 13: Seitenkante
- 14: Frontkante
- 15: Hauptschneidkante
- 16: Werkstück
- 17: Anschliff
- 18: Einschnitt
- 19,20: Seitenschenkel
- 21: Boden
- 22: Hauptschneidkante
- 23: Ausschnitt
- 24: Anschnitt
- 25: Flächenmittelpunkt
- 26: Bohrung
- 27: Rohform
- 28: Umfang
- 29: Ringachse
- 30: Anschliff
- 31: Eckbereich
- 32: Klemmpratze
- 33: Stützsteg
- 34: Haltesteg
- 35: Nut
- 36: Schraube
- 37: Wand
- 38: Schraubenachse
- V: Vorschubrichtung
- F: Kraft

## Patentansprüche

1. Schneidwerkzeug (1) mit einer Schneidplatte (3), an deren Frontkante (14) eine erste Hauptschneidkante (15) und ein diese unterbrechender, etwa U-förmiger Einschnitt (18) angeordnet ist, wobei die Seitenschenkel (19, 20) des Einschnitts (18) jeweils eine Nebenschneidkante, und der Boden (21) des Einschnitts (18) eine in Vorschubrichtung (V) hinter die erste Hauptschneidkante (15) zurückversetzte zweite Hauptschneidkante (22) bilden, und wobei die Schneidplatte (3) aus mindestens zwei getrennten Teilstükken (4a,4b) gebildet ist, von denen jedes einen Teil des Einschnitts (18) trägt.

2. Schneidwerkzeug nach Anspruch 1,
**dadurch gekennzeichnet,**
**dass** die erste Hauptschneidkante (15) mit dem jeweils angrenzenden Seitenschenkel (19, 20) einen spitzen Winkel bildet.

3. Schneidwerkzeug nach einem der Ansprüche 1 oder 2,
**dadurch gekennzeichnet,**
**dass** die erste Hauptschneidkante (15) eine gerade, senkrecht zur Vorschubrichtung (V) orientierte Linie bildet.

4. Schneidwerkzeug nach einem der Ansprüche 1 bis 3,
**dadurch gekennzeichnet,**
**dass** die zweite Hauptschneidkante (22) etwa parallel zur ersten Hauptschneidkante (15) verläuft.

5. Schneidwerkzeug nach einem der Ansprüche 1 bis 4,
**dadurch gekennzeichnet,**
**dass** jedes Teilstück (4) parallele Seitenkanten (11, 13) aufweist.

6. Schneidwerkzeug nach Anspruch 5,
**dadurch gekennzeichnet,**
**dass** die Seitenkanten (11, 13) unter spitzem Winkel bezüglich der Vorschubrichtung (V) ausgerichtet sind.

7. Schneidwerkzeug nach einem der Ansprüche 1 bis 6,
**dadurch gekennzeichnet,**
**dass** jedes Teilstück (4) eine zur Vorschubrichtung (V) etwa senkrechte Hinterkante (6) aufweist.

8. Schneidwerkzeug nach einem der Ansprüche 1 bis 7,
**dadurch gekennzeichnet,**
**dass** ein erstes Teilstück (4b) einen Seitenschenkel (20) des Einschnitts (18) trägt, und dass ein zweites Teilstück (4a) den Boden (21) sowie den anderen Seitenschenkel (19) des Einschnitts (18) trägt.

9. Schneidwerkzeug nach einem der Ansprüche 1 bis 8,
**dadurch gekennzeichnet,**
**dass** die Teilstücke (4a, 4b) identisch ausgebildet sind.

10. Schneidwerkzeug nach einem der Ansprüche 1 bis 9,
**gekennzeichnet durch**
mindestens ein Teilstück (4) mit einer bezüglich seines Flächenmittelpunkts (25) punktsymmetrischen Grundfläche.

11. Schneidwerkzeug nach einem der Ansprüche 1 bis 10,
**gekennzeichnet durch**
einen Werkzeughalter (2), der eine Auflagefläche (5) für die Schneidplatte (3), einen mit der Hinterkante (6) der Schneidplatte (3) zusammenwirkenden rückwärtigen Anschlag (7) sowie einen mit einer Seitenkante (11a) der Schneidplatte (3) zusammenwirkenden seitlichen Anschlag (10) umfasst.

12. Schneidwerkzeug nach einem der Ansprüche 1 bis 11,
**dadurch gekennzeichnet,**
**dass** die Schneidplatte (3) mittels einer Schraubfixierung am Werkzeughalter (2) gehalten ist.

13. Schneidwerkzeug nach einem der Ansprüche 1 bis 11,
**dadurch gekennzeichnet,**
**dass** die Schneidplatte (3) durch eine Pratzenklemmung am Werkzeughalter (2) gehalten ist.

14. Schneidwerkzeug nach Anspruch 13,
**dadurch gekennzeichnet,**
**dass** die oder jede Klemmpratze (32) derart ausgebildet ist, dass unbenutzte Schneidenkanten (23a', 24a', 23b', 23b) der Schneidplatte (3) durch die Klemmpratze (32) abgedeckt sind.

## Claims

1. Cutting tool (1) having a cutting tip (3), at the front edge (14) of which a first main cutting edge (15) and an approximately U-shaped incision (18) which interrupts the first main cutting edge (15) are arranged, the side limbs (19, 20) of the incision (18) each forming an auxiliary cutting edge, and the base (21) of the incision (18) forming a second main cutting edge (22), which is set back behind the first main cutting edge (15) as seen in the direction of advance (V), and the cutting tip (3) being formed from at least two separate pieces (4a, 4b), each of which includes part of the incision (18).

2. Cutting tool according to Claim 1, **characterized in that** the first main cutting edge (15) forms an acute angle with the respectively adjacent side limb (19, 20).

3. Cutting tool according to Claim 1 or 2, **characterized in that** the first main cutting edge (15) forms a straight line oriented perpendicular to the direction of advance (V).

4. Cutting tool according to one of Claims 1 to 3, **characterized in that** the second main cutting edge (22) runs approximately parallel to the first main cutting edge (15).

5. Cutting tool according to one of Claims 1 to 4, **characterized in that** each piece (4) has parallel side edges (11, 13).

6. Cutting tool according to Claim 5, **characterized in that** the side edges (11, 13) are oriented at an acute angle with respect to the direction of advance (V).

7. Cutting tool according to one of Claims 1 to 6, **characterized in that** each piece (4) has a rear edge (6) which is approximately perpendicular to the direction of advance (V).

8. Cutting tool according to one of Claims 1 to 7, **characterized in that** a first piece (4b) includes a side limb (20) of the incision (18), and **in that** a second piece (4a) includes the base (21) and the other side limb (19) of the incision (18).

9. Cutting tool according to one of Claims 1 to 8, **characterized in that** the pieces (4a, 4b) are identical in form.

10. Cutting tool according to one of Claims 1 to 9, **characterized by** at least one piece (4) with a basic area which is point-symmetrical with respect to the centre point (25) of its area.

11. Cutting tool according to one of Claims 1 to 10, **characterized by** a tool holder (2) which comprises a bearing surface (5) for the cutting tip (3), a back stop (7), which interacts with the rear edge (6) of the cutting tip (3), and a side stop (10), which interacts with a side edge (11a) of the cutting tip (3).

12. Cutting tool according to one of Claims 1 to 11, **characterized in that** the cutting tip (3) is held on the tool holder (2) by means of screw fixing.

13. Cutting tool according to one of Claims 1 to 11, **characterized in that** the cutting tip (3) is held on the tool holder (2) by a claw clamping arrangement.

14. Cutting tool according to Claim 13, **characterized in that** the or each clamping claw (32) is designed in such a manner that unused cutting edges (23a', 24a', 23b', 23b) of the cutting tip (3) are covered by the clamping claw (32).

## Revendications

1. Outil de coupe (1) comportant une plaque de coupe (3) sur le bord frontal (14) de laquelle sont agencées une première arête de coupe principale (15) et une encoche (18) en forme de U interrompant celle-ci, les branches latérales (19, 20) de l'encoche (18) formant chacune une arête de coupe auxiliaire, et le fond (21) de l'encoche (18) formant une deuxième arête de coupe principale (22) en retrait derrière la première arête de coupe principale (15) dans la direction d'avancement (V), et la plaque de coupe (3) étant formée par au moins deux sous-parties (4a, 4b) séparées, dont chacune porte une partie de l'encoche (18).

2. Outil de coupe selon la revendication 1,
**caractérisé en ce que**,
la première arête de coupe principale (15) forme un angle aigu avec la branche latérale (19, 20) respectivement adjacente.

3. Outil de coupe selon la revendication 1 ou 2,
**caractérisé en ce que**,
la première arête de coupe principale (15) forme une ligne droite, orientée perpendiculairement à la direction d'avance (V).

4. Outil de coupe selon l'une quelconque des revendications 1 à 3,
**caractérisé en ce que**,
la deuxième arête de coupe principale (22) est orientée à peu près parallèlement à la première arête de coupe principale (15).

5. Outil de coupe selon l'une quelconque des revendications 1 à 4,
**caractérisé en ce que**,
chaque sous-partie (4) comporte des bords latéraux (11, 13) parallèles.

6. Outil de coupe selon la revendication 5,
**caractérisé en ce que**,
les bords latéraux (11, 13) sont orientés en formant un angle aigu par rapport à la direction d'avance (V).

7. Outil de coupe selon l'une quelconque des revendications 1 à 6,
**caractérisé en ce que**,
chaque sous-partie (4) comporte un bord arrière (6) sensiblement perpendiculaire à la direction d'avance (V).

8. Outil de coupe selon l'une quelconque des revendications 1 à 7,
**caractérisé en ce que**,
une première sous-partie (4b) porte une branche latérale (20) de l'encoche (18) et **en ce qu'**une deuxième sous-partie (4a) porte le fond (21), ainsi que l'autre branche latérale (19) de l'encoche (18).

9. Outil de coupe selon l'une quelconque des revendications 1 à 8,
**caractérisé en ce que**
les sous-parties (4a, 4b) sont identiques.

10. Outil de coupe selon l'une quelconque des revendications 1 à 9,
**caractérisé par**,
au moins une sous-partie (4) avec une surface de base à symétrie ponctuelle par rapport à son centre de surface (25).

11. Outil de coupe selon l'une quelconque des revendications 1 à 10,
**caractérisé par**
un porte-outil (2), qui comporte une face d'appui (5) pour la plaque de coupe (3), une butée (7) arrière coopérant avec le bord arrière (6) de la plaque de coupe (3), ainsi qu'une butée latérale (10) coopérant avec un bord latéral (11a) de la plaque de coupe (3).

12. Outil de coupe selon l'une quelconque des revendications 1 à 11,
**caractérisé en ce que**,
la plaque de coupe (3) est maintenue par vissage contre le porte-outil (2).

13. Outil de coupe selon l'une quelconque des revendications 1 à 11,
**caractérisé en ce que**,
la plaque de coupe (3) est maintenue par un serrage à griffes contre le porte-outil (2).

14. Outil de coupe selon la revendication 13,
**caractérisé en ce que**
la ou chaque griffe de serrage (32) est conçue de telle sorte que des arêtes de coupe (23a', 24a', 23b', 23b) non utilisées de la plaque de coupe (3) sont protégées par la griffe de serrage (32).
